# EUROPEAN PATENT APPLICATION

(11) **EP 0 720 077 A2**
(43) Date of publication of application: **03.07.1996**
(21) Application number: 95203528.5
(22) Date of filing: 16.12.1995
(51) Int. Cl.: G05D 23/19

(54) **Programmable thermostat with graphical and numerical temperature display**

(30) Priority: 29.12.1994 IT MI940868 U
(71) Applicant: Perry Electric S.r.l., Veniano, Como (IT)
(72) Inventor: Galimberti, Roberto, I-20051 Limbiate (Milano) (IT)
(74) Representative: Raimondi, Alfredo, Dott. Ing. Prof.

(57) **Abstract**

Programmable thermostat for controlling different temperature levels, comprising a display (103) including a graphical arrangement with symbols in the form of segments indicating the hours of the day, aligned on different levels (T1, T2, T3) corresponding to a same number of programmable temperature values, buttons (25, 26, 27) for setting preselected intervals on said graphical arrangement, as well as means (28) for setting the days in a week, and a digital clock (29), characterized in that it comprises at least one digital-numerical display (32, 33, 34) showing the values (T1, T2, T3) of the programmable temperatures, said programmable temperature values being related to the same number of symbols (T1, T2, T3) of said graphical time-programming arrangement, so as to allow immediate viewing both of the preset temperature values and the time intervals during which the different temperature values are maintained.

## Description

The present invention relates to a programmable thermostat for regulating the temperature in closed environments and for predetermined time periods, with direct reading, from a digital-numerical display, of each temperature value programmed for a predetermined time interval.

It is known that the thermostats currently used in closed environments for the programming, in relation to the user's requirements, of different temperature values during the various daytime and nighttime hours allow programming of the temperature for twenty-four hours and for all the days in the week; thermostats are also known, where the sequence of programmed temperatures is displayed by means of graphic symbols arranged on several levels, corresponding to a same number of differing and programmable temperature values. Said graphic symbols, substantially consisting of luminous segments or the like, arranged along an ideal abscissa axis corresponding to twenty-four hours, are visible on the thermostat display and allow the user to view, for each hour, only the variations in ambient temperature corresponding to a drop or rise in the temperature itself.

All of said graphic symbols therefore form, on the thermostat display, a graphical lay-out which comprises several parallel and horizontal lines arranged above one another, each corresponding to a predetermined temperature value and being divided up into segments corresponding to the twenty-four hours in a day (time period).

When viewing this graphical arrangement, however, the user is unable to determine the temperature values, expressed in degrees centigrade, of the symbols which distinguish the different levels of the graphical arrangement. In fact, in order to determine in degrees centigrade which programmed temperatures correspond to the graphical arrangement visible on the display, he/she must operate a set of buttons specially provided for this purpose, following a predetermined procedure.

The programmable thermostats currently known, therefore, in addition to having the drawback that they do not allow real and immediate viewing of the programmed temperatures which correspond to the graphical arrangement shown, also have the disadvantage that they are structurally complex and difficult to program and access by the end user, who is not normally a technical expert. Furthermore, the subdivision of the twenty-four hours in a day is such that the smallest value which can be displayed is equivalent to one hour, resulting in the impossibility of displaying also programming of the fractions of an hour.

The technical problem posed, therefore, is that of providing a programmable thermostat which eliminates the aforementioned drawbacks of the thermostats currently known and in particular which is such that it can be easily programmed and allows immediate and direct reading of the information which can be displayed on the graphical arrangement.

Within the scope of this problem, the aim is therefore that of providing a programmable thermostat of the type with graphical display of the temperature levels programmable during the twenty-four hour period, which is structured in such a way as to render immediately and simultaneously legible on a display both the graphical representation of the temperatures set during the different periods of twenty-four daily hours, for each day in the week, and the numerical values in degrees centigrade of the temperatures programmed in relation to said various values displayed in graphic form.

Furthermore, it is required that the thermostat should allow displaying of the programmed temperature variations also in time periods equivalent to fractions of an hour and should be simultaneously and automatically able to interrupt the preset programming sequence in particular conditions of use, such as for example those which occur when the windows are opened to air temporarily the environment or when there are expected to be long periods of absence of the user during which there is no need for the environment to be heated.

This technical problem is solved according to the present invention by a programmable thermostat for controlling different temperature levels, comprising a display including a graphical arrangement with symbols in the form of segments indicating the hours of the day, aligned on different levels corresponding to a same number of programmable temperature values, buttons for setting preselected intervals on said graphical arrangement, as well as means for setting the days of a week, and a digital clock, comprising at least one digital-numerical display showing the values of the programmable temperatures, said programmable temperature values being related to same number of symbols of said graphical time-programming arrangement, so as to allow immediate viewing both of the predetermined temperature values and of the time intervals during which the different temperature values are maintained.

More particularly, it is envisaged that said digital-numerical display should comprise at least two and preferably three numeric characters, at least one of which has smaller dimensions than the other two, said smaller-size number representing the fractional values of the unit of measurement of the temperature.

Further characteristic features of the present invention will emerge more clearly from the following description, provided with reference to the accompanying drawings in which:
Figure 1 is a schematic front view of a programmable thermostat with a display according to the present invention, and
Figure 2 shows the thermostat of Figure 1 in the condition where it is performing a countdown.

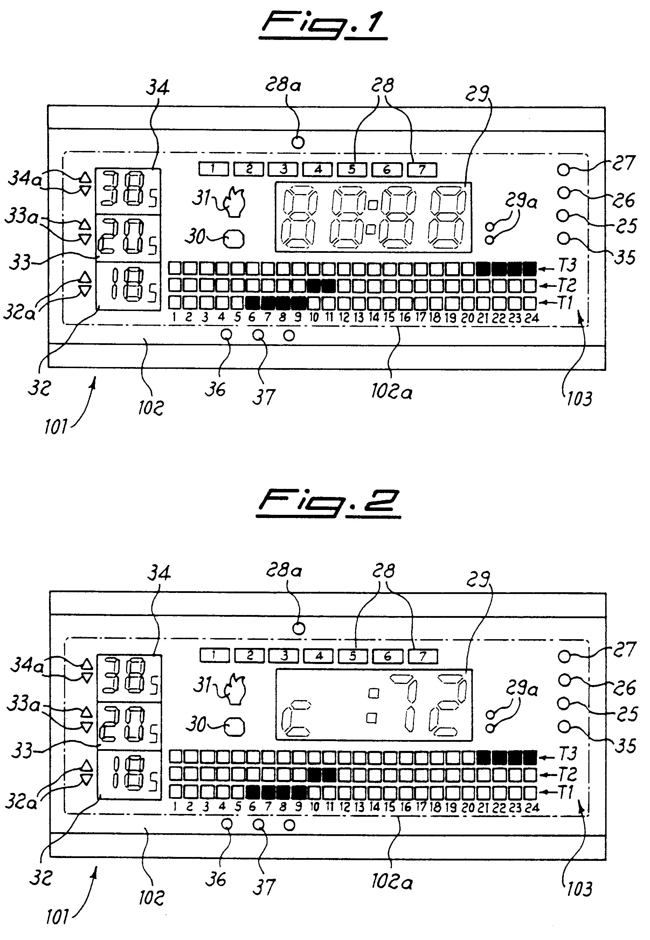

With reference to Figure 1, the thermostat forming the subject of the invention, denoted overall by 101, has a conventional box-shaped body containing inside it the known circuitry, i.e. a programmable electronic system designed to sense the temperature and drive the display and the internal functions of the thermostat. The front surface 102 of the box-shaped body 101 has formed on it a panel 102a defining a digital display 103, of the liquid crystal type or the like, provided with three horizontal and parallel lines indicated by the letters T1, T2 and T3. Each line consists of subdivisions numbered from 1 to 24 in accordance with each hour, so that all three similar lines of subdivisions form a graphical representation, on three levels, of the temperature which is programmed, as explained more clearly below, during the course of twenty-four hours in a day and in general for variable time intervals, as required by the user. The duration of the time intervals during which a certain temperature must be reached and maintained can be set by means of buttons, for example the buttons 25, 26, 27.

The said display 103 is also provided with the following:
seven luminous segments, denoted overall by 28 and showing the numbers 1 to 7, which are respectively intended for determining the individual days in a week and can be activated by means of an associated button 28a with which it is possible to select the various days on which the programmed temperature sequence will be activated;
a four-digit digital clock 29, which can be adjusted by means of buttons 29a, and a lamp 30 for signalling that the battery is discharged or the like;
a lamp 31 for signalling correct operation of the load, for example a boiler controlled by the thermostat.

Each of said three levels T1, T2, T3 forming the graphical arrangement for programming the temperature during the time interval has associated with it a display consisting of three digits, two of which have larger dimensions than the third one, indicated by 32, 33 and 34, respectively, and designed to display the three different temperature levels preselected for the various time intervals and programmable by means of the associated buttons 32a, 33a, 34a, which are able to increase or decrease said temperature values; said three temperature levels are expressed in numerical characters representing degrees centigrade and are related to the individual rows or segments displaying the hourly periods during which it is required to obtain a predetermined temperature.

More precisely, the display 32 relates to the time scale T1, the display 33 to the scale T2 and the third display 34 to the scale T3. On said digital displays it is therefore possible to program and read off, in degrees centigrade with a decimal value represented by the third smaller-size digit, temperature values varying from O°C up to 99.5°C.

Therefore, in order to set a program consisting of temperatures varying, during the twenty-four period of each day, between the three temperature levels programmable by means of the three displays 32, 33, 34, the user first of all determines and sets the desired day(s) of the week by pressing the associated button 28, followed by the number of hours during which a predetermined temperature is required by means of the buttons 25, 26, 27. The setting will thus be automatically activated from the hour indicated by the clock 29.

After setting the day of the week and the hourly periods on the hourly graphical arrangement, the user proceeds to set the temperature level required for the different time periods defined on the graphical arrangement T1, T2, T3 by operating the buttons 32a, 33a, 34a of the displays 32, 33, 34; he/she will thus be able to directly view the programmed temperature in degrees centigrade. In practice, and by way of example, a user who wishes to have on Wednesdays a temperature of 18.5°C from 6 to 9 am must set the day Wednesday by means of the associated button 28a, set the four preselected hours by activating the associated subdivisions of the level T1 via the button 27 and then proceed to set the temperature value of 18.5°C on the display 32 of the first level by means of the associated button 32a; this setting results in activation of the subdivisions corresponding to the hourly period from 6 to 9 am on the first level T1. If the user then wishes to increase the temperature to 20.5°C for the period between 10 and 11 am, he/she activates the display 33 of the second level by also activating the associated subdivisions of the level T2 and then if, during the period, between 9 and 12 pm (hours 21 and 24) he/she wishes to increase the temperature to 38.5°C, he/she activates the display of the third level 34 following the procedure already described and using the associated buttons 34a. At the temperature set on the third level for the hours 10 and 11, the subdivisions of the levels previously set for the same period will remain activated, so as to allow viewing of the temperature sequence during the various hourly periods of the day on the graphical arrangement of the time periods.

In other words, the user will have the possibility of associating with the various levels of subdivisions of the time scales T1, T2, T3 the temperatures shown in numerical characters on the three displays 32, 33, 34 which indicate the programmed temperatures in degrees centigrade, this allowing direct viewing of the temperature sequence programmed on the graphical arrangement during the time periods, without having to operate any other button in order to check the actual temperatures programmed.

The thermostat according to the invention is provided with further function buttons denoted by 35, 36 and 37. The first of these buttons 35 corresponds to the selection of a fixed anti-frost temperature, which is not displayed, but is automatically maintained during the hourly subdivisions for which no temperature has been programmed. In other words, if no programming has been performed, the thermostat automatically maintains a minimum temperature of 5°C to avoid any freezing of the water in the radiators when the external temperatures are well below O°C.

The button 36, on the other hand, activates a predetermined interruption of the program set in order to prevent the thermostat from following the preset temperature when there are sudden drops in the ambient temperature. This situation occurs, for example, when the windows are opened in order to ventilate and change the air in a room.

The button 37, finally, activates interruption of the set program for a period of time which is in turn programmable. In this case, when the user knows that he/she will be away, for example, for three days in a row, he/she presses the button 37, this causing displaying of a request for the length of time for which the program is to be interrupted (Figure 2); the user, by means of the buttons 29a of the clock, sets the total number of hours during which he/she will be away (72 hours in the case of three days) and the thermostat activates an automatic countdown which, once it has been completed, reactivates the programming sequence previously set for normal use.

The characteristic features and advantages offered by the present invention in practice facilitate not only the process of reading, but also that of programming of the thermostat.

Finally, according to the invention, the temperature sequence, i.e. the variations in the various temperature levels set, can be shown on the time scale T1, T2, T3 for fractions of an hour equivalent to intervals of thirty minutes. In this case, two subdivisions located above one another T1 and T2 or T3; T2 and T3 or T1; T3 and T2 or T1 opposite the same hour will light up; the first subdivision which is encountered in either direction, depending on whether an increase or decrease in temperature is being programmed, corresponds to the first fraction of an hour, while the second subdivision corresponds to the second fraction of an hour.

Obviously, in practice, the number of programmable temperature levels and the associated time scales (hours of the day) as well as the number, arrangement and grouping of the various selection and control buttons may vary depending on the requirements, without departing from the protective scope of the invention as described above and claimed hereinbelow.

## Claims

1. Programmable thermostat for controlling different temperature levels, comprising a display (103) including a graphical arrangement with symbols in the form of segments indicating the hours of the day, aligned on different levels (T1, T2, T3) corresponding to a same number of programmable temperature values, buttons (25, 26, 27) for setting preselected intervals on said graphical arrangement, as well as means (28) for setting the days in a week, and a digital clock (29), characterized in that it comprises at least one digital-numerical display (32, 33, 34) showing the values (T1, T2, T3) of the programmable temperatures, said programmable temperature values being related to the same number of symbols (T1, T2, T3) of said graphical time-programming arrangement, so as to allow immediate viewing both of the preset temperature values and the time intervals during which the different temperature values are maintained.

2. Adjustable thermostat according to Claim 1, characterized in that said digital-numerical display comprises at least two numerical characters.

3. Programmable thermostat according to Claims 1 and 2, characterized in that said numerical characters are three in number, at least one of which has smaller dimensions than the other two.

4. Programmable thermostat according to the preceding claims, characterized in that said smaller-size character represents the fractional values of the unit of measurement of the temperature.

5. Adjustable thermostat according to Claim 1, characterized in that it comprises at least one button (35) for activating a fixed anti-frost temperature.

6. Thermostat according to Claim 1, characterized in that it comprises at least one button (36) for activation of a procedure interrupting operation of the set program for a predefined fixed interval.

7. Thermostat according to Claim 1, characterized in that comprises at least one button for interrupting the activated program for a programmable time interval.

8. Thermostat according to Claims 1 and 7, characterized in that said programmable time interval can be zeroed automatically by means of a countdown and reactivates the program previously interrupted.
